# EUROPEAN PATENT APPLICATION

(11) **EP 4 810 179 A1**
(43) Date of publication of application: **23.09.2026**
(21) Application number: 26165842.1
(22) Date of filing: 18.03.2026
(51) Int. Cl.: B22F 3/16, B22F 5/10, B22F 10/28, B22F 10/50, B33Y 10/00, B33Y 40/00, B33Y 80/00, C22C 1/04, C22C 19/05, C22F 1/10, C22F 3/00, B22F 5/00, B22F 5/04

(54) **LASER POWDER BED FUSION ADDITIVE MANUFACTURING WITH IN-SITU LASER PEENING**

(30) Priority: 21.03.2025 US 202519086898
(71) Applicant: RTX Corporation, Farmington, CT 06032 (US)
(72) Inventor: OTT, Joseph, Enfield, 06082 (US); BINEK, Lawrence, Glastonbury, 06033 (US); PAUN, Jillian, Colchester, 06415 (US)
(74) Representative: Dehns

(57) **Abstract**

A method of building a component using additive manufacturing techniques includes depositing and sintering one or more layers of build powder using a PBF-L process to form an intermediate consolidated build powder structure having a sintered surface. The PBF-L process is paused and a laser peening process is performed in situ on the sintered surface to induce a desired residual stress profile in selected layers of the intermediate consolidated build powder structure. The PBF-L process is resumed to deposit and sinter one or more layers of additional build powder onto the intermediate consolidated build powder structure to form an additional intermediate consolidated build powder structure having an additional sintered surface. The steps are repeated a predetermined number of times to form a finished component. The complete component includes one or more zones of residual stress imparted by the laser peening process in one or more interior layers.

## Description

The present disclosure relates generally to laser powder bed fusion (PBF-L) additive manufacturing (AM) techniques and, more particularly, to use of in-situ laser peening during a PBF-L AM process.

Components built with laser powder bed fusion (PBF-L) additive manufacturing (AM) techniques can have post-sintering porosity that can lead to cracking and/or fatigue debits. The post-sintering porosity can be attributed to, among various potential causes, residual unsintered powder particles from the AM process, discontinuities in the component's as-built grain structure, residual stresses from the sintering process (which can be related to treatment of the PBF-L process as a "welding process") and/or other causes.

### SUMMARY

One aspect of this disclosure is directed to a method of building a component using additive manufacturing techniques. One or more layers of build powder are deposited and sintered using a laser powder bed fusion (PBF-L) process to form an intermediate consolidated build powder structure having a sintered surface. The PBF-L process is paused and a laser peening process is performed on the sintered surface to induce a desired residual stress profile in selected layers of the intermediate consolidated build powder structure. The laser peening process is performed in situ such that the intermediate consolidated remains on a build plate in a PBF-L machine during the laser peening process. The PBF-L process is resumed to deposit and sinter one (1) or more layers of additional build powder onto the intermediate consolidated build powder structure to form an additional intermediate consolidated build powder structure having an additional sintered surface. The steps are repeated a predetermined number of times to form a finished component. The complete component includes one (1) or more zones of residual stress imparted by the laser peening process in one (1) or more interior layers.

Another aspect of this disclosure is directed to a component formed by a laser powder bed fusion process including a consolidated build powder structure that forms a finished component. The complete component includes one (1) or more zones of residual stress imparted by a laser peening process in one (1) or more interior layers.

### BRIEF DESCRIPTION OF THE DRAWINGS

Fig. 1 is a flow chart outlining the laser bed powder bed fusion (PBF-L) additive manufacturing (AM) and in-situ laser peening process of this disclosure.
Fig. 2 is a schematic of a component being built with a PBF-L AM process of this disclosure.
Fig. 3 is a schematic of a component being laser peened using the in-situ laser peening process of this disclosure.
Fig. 4 is a schematic of two (2) components made with the PBF-L AM and in-situs laser peening process of this disclosure that include internal features that do not have line of sight for peening after the PBF-L process is completed.

### DETAILED DESCRIPTION

Components built with laser bed powder bed fusion (PBF-L) additive manufacturing (AM) techniques can have post-sintering porosity that can lead to cracking and/or fatigue debits. The post-sintering porosity can be attributed to, among various potential causes, residual unsintered powder particles from the AM process, discontinuities in the component's as-built grain structure, residual stresses from the sintering process (which can be related to treatment of the PBF-L process as a "welding process") and/or other causes.

A solution for improving residual stress and grain structure discontinuities in components built with PBF-L AM techniques is to perform laser shock peening on the components. Laser shock peening is a process in which a laser fires energy at a material surface to cause local mechanical compression with a shockwave. The mechanical compression, like cold working a metal, propagates through several additively manufactured layers of the build to apply a local compressive stress through several build powder layers that can close grain discontinuities, reduce tensile stresses, and increasing component life.

This disclosure leverages this benefit of laser shock peening by incorporating the laser peening process into a PBF-L process using the laser or lasers that are already components of the PBF-L machine as a method to improve deposited material in-situ and potentially reduce post-build processing (e.g., stress relief, hot isostatic pressing (HIP), follow-on mechanical or laser peening, etc.). Depending on the PBF-L AM process, laser peening can be applied on every one (1), two (2), three (3), or more AM layers to maintain a desired residual compressive stress in earlier built (i.e., lower) AM layers while the current surface AM layers are sintered. Laser peening during the AM build process provides the additional benefit of peening internal component geometry as it is built, providing benefits from the laser peening that would not be available to a fully consolidated component that would typically have only its external surfaces laser peened due to line of sight requirements for the peening laser.

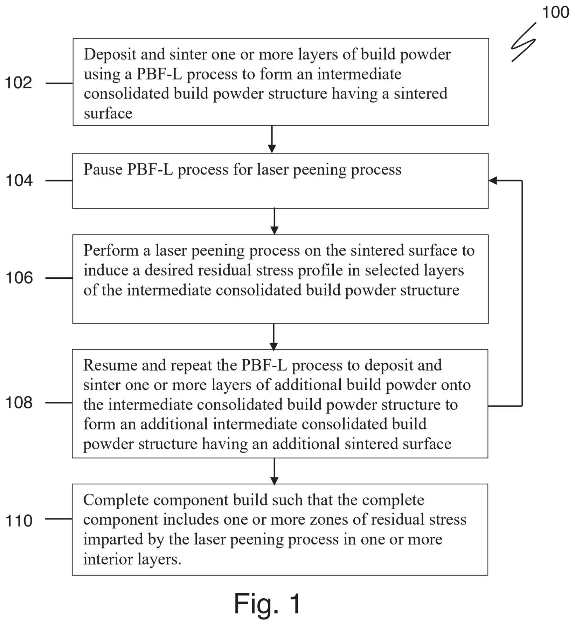

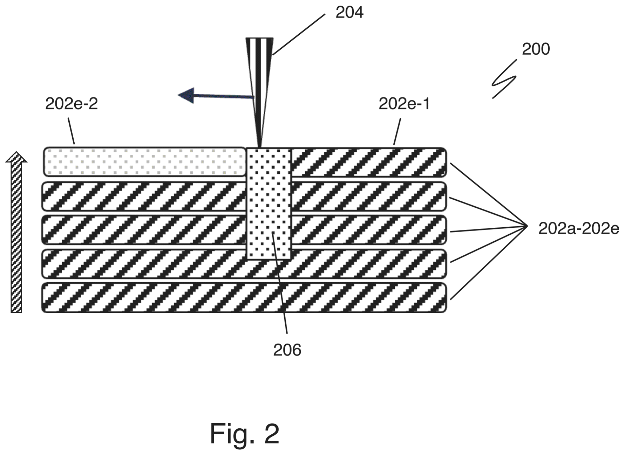

Fig. 1 is a flow chart showing the overall process flow **100** for the in-situ laser peening process of this disclosure. At step **102,** one (1) or more build powder layers are deposited and sintered consistent using a typical PBF-L AM process to form an intermediate consolidated build powder structure having a sintered surface (see Figs. 2). For example, following deposition of the build powder layer, one (1) or more lasers that are part of the PBF-L machine used for the PBF-L process scans the AM build powder layer at a predetermined intensity in a predetermined pattern to sinter the build powder layer, forming the intermediate consolidated build powder structure. At step **104,** the PBF-L process is paused to permit the laser peening process to be performed. At step **106,** the laser peening process is performed in situ (i.e., the component or components being built with the PBF-L build process remain on the build plate in the PBF-L machine) using a peening scan strategy that is programed to direct the laser (or lasers) at a predetermined intensity to specific locations on the sintered surface of the intermediate consolidated build powder structure. The laser peening process is described in more detail below. At step **108,** the PBF-L process is resumed for one (1) or more additional build powder layers until the PBF-L process is again paused (i.e., returning to step **104)** and the laser peening process is repeated (i.e., returning to step **106)** with peening parameters selected for the one (1) or more additional build powder layers built at step **108.** As discussed further below, steps **108, 104,** and **106** are repeated a predetermined number of times until the component is finished at step **110** (i.e., after a desired number of build powder layers are deposited, sintered, and peened).

The laser peening process discussed above can induce a compressive stress across multiple build powder layers depending on the material properties, laser intensity, and scan pattern. For example, research data for IN718 shows that laser peening can induce desired compressive stresses up to 1 mm (1000 microns) deep in the component being built with the PBF-L process. Based on build powder layers that are 40 microns thick, the laser peening can induce compressive stresses about twenty five (25) layers deep into the component. By contrast, each layer of laser sintering can sinter as deep three (3) layers (i.e., 120 microns), leaving more that twenty (20) layers that were previously subject to laser peening to retain compressive stresses from the laser peening step.

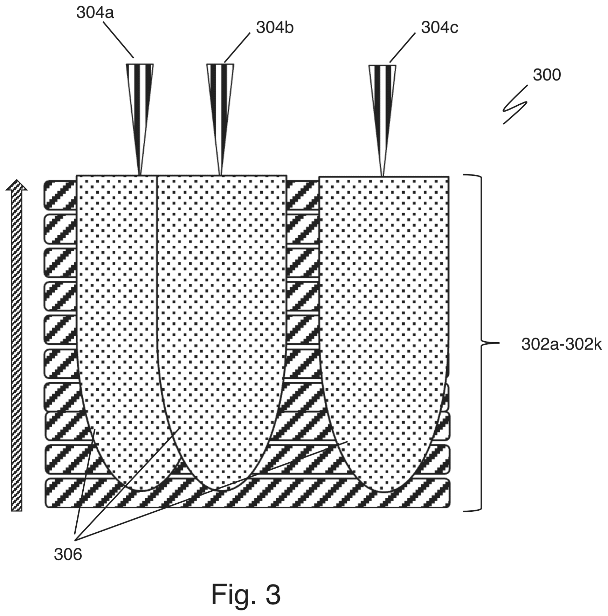

Figs. 2 and 3 illustrate the impact of laser sintering compared with laser peening. In the Fig. 2 example, a component **200** made using a PBF-L AM process includes at least five (5) build powder layers **202a-202e.** Laser beam **204** scans across the top layer **202a** at a predetermined intensity and scan pattern to sinter the layer progressively, with top layer portion **202e-1** already sintered and top layer portion **202e-2** not yet sintered. Component **200** includes a keyhole defect **206** that extends for slightly more than three (3) layers (i.e., layers **202a, 206b,** and **202c).** The PBF-L AM process should be performed using process parameters deemed appropriate for the desired build campaign. For example, the material feed rate (e.g., powder feed rate), material layer depth (e.g., powder bed depth), laser beam power level and scan pattern, and other relevant process parameters should be selected in view of the powder properties and the component or components to be built during the desired build campaign.

Fig. 3 shows an example of a laser peening process performed on a component **300** made using a PBF-L AM process that includes at least ten (10) build powder layers **302a-302k.** In the example of Fig. 3, three (3) lasers **304a, 304b, 304c** provide the energy to perform the laser peening process. As discussed further below, a laser peening process of this disclosure can use one (1), two (2), three (3), or more lasers to perform the laser peening process at selected laser intensities and selected laser scan patterns. Each of the lasers **304a, 304b, 304c** produce a peened zone **306** that extends a selected depth into the component **300** to induce a selected degree of compressive stresses. In the example of Fig. 3, the peened zone **306** extends ten (10) layers deep. As discussed above, in other examples, the peened zone **306** can extend up to 1000 microns (e.g., in some cases up to twenty five (25) layers) deep.

The laser peening process is a cold, mechanical process that induces compressive residual stress into the component **300.** Laser peening involves interaction of short duration laser pulses with a surface of the component **300** to create a plasma, which can be further confined by a medium, to develop a shock wave pressure of, for example, several giga pascals. The shock wave propagates into the component **300,** resulting in plastic deformation when the shock wave pressure exceeds the Hugoniot elastic limit of the material used to make the component **300.** In one example, the laser peening is performed using an absorbent coating and a transparent overlay (e.g., a stream of water or other suitable transparent medium) that acts as an inertial tamping layer to focus the laser energy on the component **300** to create a desired shock wave when the laser beam impinges on selected locations on the component **300.**

In another example, use of a high intensity laser that is pulsed for an ultrashort time (e.g., femtosecond laser pulse) can render both the absorbent coating and a transparent overlay not necessary (i.e., dry laser peening). The intensity of the femtosecond laser pulse, which is equivalent to the energy per unit time and unit area and is proportional to the square of the electric field intensity, is extremely high even at a low energy because the pulse width is extremely short. In some examples, the heat-affected and melted zones formed by a femtosecond laser pulse are much smaller than those produced by a nanosecond laser pulse because of the extremely short pulse width of the femtosecond laser pulse.

Consistent with the discussion above, the laser beam should be configured to generate pulses at a selected intensity for a selected time. For example, the laser beam can be configured to produce pulse energy of up to 600 J (in some examples, between 5J and 40J) with pulse durations of 120 fs to 30 ns (in some examples, between 8 ns and 25 ns) and to produce a laser spot diameter on the surface of the component **300** between 2 mm and 7 mm. Upon impacting the surface of the component **300,** the laser pulse forms and heats a plasma that can provide a shockwave of up to about 100 kbar that plastically deforms the material as it penetrates to the desired depth, which in some examples can range from 1 mm to 12 mm. If desired, multiple firings of the laser in a pre-defined surface pattern will impart a layer of plastic strain resulting in a deterministic deep layer of compressive residual stress. The process can be tailored to suit the product and potential failure mechanism or enable higher potential loads through weight-sensitive designs.

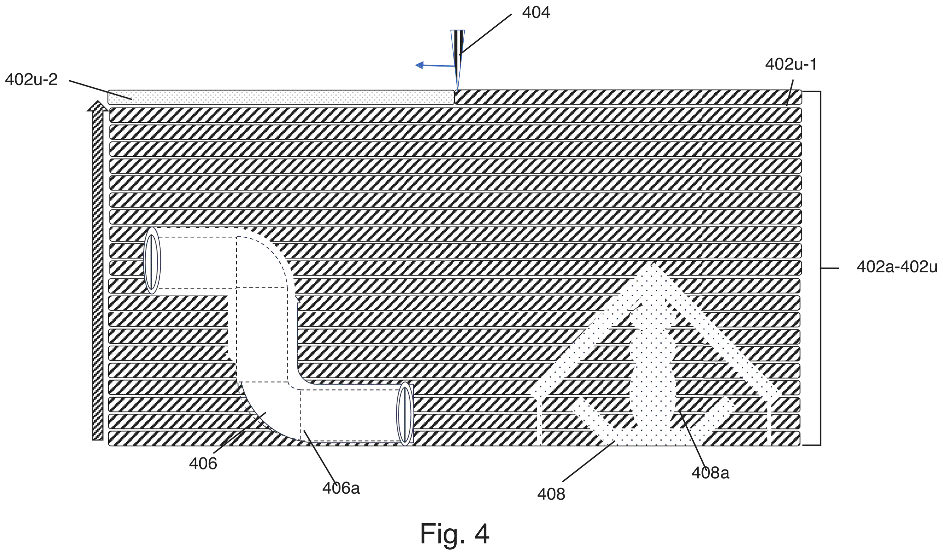

While the laser peening process can ablate portions of the component's **300** surface layer, "damage" to the surface layer is "repaired" when the new layer is deposited above the "damaged" layer is sintered and the melt pool penetrates through the "damaged" layer. As a result, only final surface layer(s) may need a subsequent post-processing mechanical peening or mechanical polishing to create a finished surface with desired compressive stresses. If the component **300** built using the disclosed PBF-L AM and in-situ laser peening method includes features that will form internal features of a finished component, the incremental use of laser peening allows such features to be peened as built. As a person of ordinary skill will recognize peening or internal features of component is typically very difficult if not impossible to achieve with conventional casting or similar manufacturing techniques because outer surfaces of such parts shield the internal features from direct line of sight to the peening media. As shown in Fig. 4, exemplary components **406, 408** have internal features (e.g., internal ribs **406a** in component **406)** or features that would be shielded from peening media after a build is completed (e.g., internal surface **408a** in component **408).** As a result, the disclosed in-situ laser peening process allows access to more, or even all, features of a part, including internal features and shielded features, to benefit from laser peening. The incremental, layer-by-layer PBF-L AM and in situ laser peening method provides line of sight to all features, including internal features and shielded features, to facilitate in-process laser peening.

The disclosed PBF-L AM and in-situ laser peening method can be used with any materials that can benefit from the incremental, in-situ laser peening. In some examples, components made with the disclosed method can be made with a superalloy material, such as a nickel-based superalloy including, but not limited to, IN718 or MAR-M247.

The process described in this disclosure can be particularly useful to parts **300** that will benefit from incremental, in-situ laser peening. Such parts can include fan blades, fan cases, heat exchangers, tube and fitting components, vanes, turbine parts, and other components made using PBF-L AM techniques.

### Discussion of Possible Embodiments

The following are non-exclusive descriptions of possible embodiments of the present invention.

A method of building a component using additive manufacturing techniques includes depositing and sintering one or more layers of build powder using a laser powder bed fusion (PBF-L) process to form an intermediate consolidated build powder structure having a sintered surface. The PBF-L process is paused and a laser peening process is performed on the sintered surface to induce a desired residual stress profile in selected layers of the intermediate consolidated build powder structure. The laser peening process is performed in situ such that the intermediate consolidated structure remains on a build plate in a PBF-L machine during the laser peening process. After the laser peening, the PBF-L process is resumed to deposit and sinter one (1) or more layers of additional build powder onto the intermediate consolidated build powder structure to form an additional intermediate consolidated build powder structure having an additional sintered surface. The steps are repeated a predetermined number of times to form a finished component. The complete component includes one (1) or more zones of residual stress imparted by the laser peening process in one (1) or more interior layers.

The method of the preceding paragraph can optionally include any one (1) or more of the following features, configurations and/or additional elements:
The laser peening process includes scanning a laser over the sintered surface of the intermediate consolidated build powder structure at a selected laser intensity using a selected scan pattern to induce the desired residual stress profile into the selected layers of the intermediate consolidated build powder structure.

The laser peening process uses more than one (1) laser.

At least one (1) of the one (1) or more zones of residual stress imparted by the laser peening process in the one (1) or more interior layers in the finished component is more than 1000 microns deeper in the finished component than a top surface of the finished component.

A portion of the intermediate consolidated build powder structure forms an internal feature in the finished component.

The internal feature includes one (1) or more zones of residual stress imparted by the laser peening process.

The build powder comprises a superalloy material.

The superalloy material is IN718 or MAR-M247.

A component formed by a laser powder bed fusion process includes a consolidated build powder structure that forms a finished component. The complete component includes one (1) or more zones of residual stress imparted by a laser peening process in one (1) or more interior layers.

The component of the preceding paragraph can optionally include any one (1) or more of the following features, configurations and/or additional elements:
At least one (1) of the one or more zones of residual stress imparted by the laser peening process in the one (1) or more interior layers is more than 1000 microns deeper in the finished component than a top surface of the finished component.

The component further includes an internal feature that includes one (1) or more zones of residual stress imparted by a laser peening process.

The build powder comprises a superalloy material.

The superalloy material is IN718 or MAR-M247.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of building a component (300) using additive manufacturing techniques, comprising:
depositing and sintering one or more layers (302a-302k) of build powder using a laser powder bed fusion (PBF-L) process to form an intermediate consolidated build powder structure having a sintered surface;
pausing the PBF-L process;
performing a laser peening process on the sintered surface to induce a desired residual stress profile in selected layers of the intermediate consolidated build powder structure, wherein the laser peening process is performed in situ such that the intermediate consolidated remains on a build plate in a PBF-L machine during the laser peening process;
resuming the PBF-L process to deposit and sinter one or more layers of additional build powder onto the intermediate consolidated build powder structure to form an additional intermediate consolidated build powder structure having an additional sintered surface;
repeating the above steps a predetermined number of times to form a finished component, wherein the complete component includes one or more zones (306) of residual stress imparted by the laser peening process in one or more interior layers.

2. The method of claim 1, wherein the laser peening process includes scanning a laser (304a-304c) over the sintered surface of the intermediate consolidated build powder structure at a selected laser intensity using a selected scan pattern to induce the desired residual stress profile into the selected layers of the intermediate consolidated build powder structure.

3. The method of claim 1 or 2, wherein the laser peening process uses more than one laser.

4. The method of claim 1, 2 or 3, wherein at least one of the one or more zones of residual stress imparted by the laser peening process in the one or more interior layers in the finished component is more than 1000 microns deeper in the finished component than a top surface of the finished component.

5. The method of any preceding claim, wherein a portion of the intermediate consolidated build powder structure forms an internal feature (406) or shielded feature (408) in the finished component.

6. The method of claim 5, wherein the internal feature includes one or more zones of residual stress imparted by the laser peening process.

7. The method of any preceding claim, wherein the build powder comprises a superalloy material.

8. The method of claim 7, wherein the superalloy material is IN718 or MAR-M247.

9. A component (300) formed by a laser powder bed fusion process, comprising:
a consolidated build powder structure that forms a finished component, wherein the complete component includes one or more zones (306) of residual stress imparted by a laser peening process in one or more interior layers (302a-302k).

10. The component of claim 9, wherein at least one of the one or more zones of residual stress imparted by the laser peening process in the one or more interior layers is more than 1000 microns deeper in the finished component than a top surface of the finished component.

11. The component of claim 9 or 10, further comprising an internal feature that includes one or more zones of residual stress imparted by a laser peening process.

12. The component of claim 9, 10 or 11, wherein the build powder comprises a superalloy material.

13. The component of claim 12, wherein the superalloy material is IN718 or MAR-M247.
